# EUROPEAN PATENT SPECIFICATION

(11) **EP 0 935 079 B1**
(45) Date of publication and mention of the grant of the patent: **05.07.2006**
(21) Application number: 98123059.2
(22) Date of filing: 09.12.1998
(51) Int. Cl.: F16C 33/14

(54) **Sliding bearing and method of producing same**
Gleitlager und sein Herstellungsverfahren
Palier lisse et sa méthode de production

(30) Priority: 16.01.1998 JP 2040498; 23.01.1998 JP 2638398
(43) Date of publication of application: 11.08.1999
(73) Proprietor: Daido Metal Company Ltd., Nagoya (JP)
(72) Inventor: Okado, Atsushi, Kita-ku, Nagoya (JP); Hayashi, Morihiko, Kita-ku, Nagoya (JP); Kashiyama, Kotaro, Kita-ku, Nagoya (JP); Yoshida, Issei, Kita-ku, Nagoya (JP)
(74) Representative: Albrecht, Thomas

(56) References cited:
- WO-A-97/39253
- DE-C- 658 929
- GB-A- 468 723
- GB-A- 1 535 803
- US-A- 3 104 135
- US-A- 4 578 848
- US-A- 5 290 617

## Description

### BACKGROUND OF THE INVENTION

### Field of the Invention

This invention relates to a sliding bearing, comprising a back metal and a bearing alloy layer bonded to the back metal, and also relates to a method of producing this sliding bearing, and more particularly this invention relates to both of a large-size sliding bearing and a sliding bearing of the type in which opposite end portions and a central portion of the sliding bearing, which are arranged in a direction of an axis thereof, are different from each other in bearing characteristics.

### Related Art

In a sliding bearing and particularly a large-size sliding bearing, a bearing alloy layer is bonded to a back metal sheet to form a laminated sheet, and this laminated sheet is cut in accordance with the size of the sliding bearing, thus providing a sheet piece. Then, this sheet piece is bent, and then is subjected to cutting and other processing, thereby producing the sliding bearing. Examples of known methods of forming such a laminated sheet include: a sintering method in which powder of bearing alloy is applied to be deposited on a back metal sheet, and this is sintered and rolled to form a laminated sheet; a pressure-bonding method in which a back metal sheet and a bearing alloy sheet are press-bonded together by pressing to form a laminated sheet; and a casting method in which molten bearing alloy is cast on a back metal sheet to form a laminated sheet.

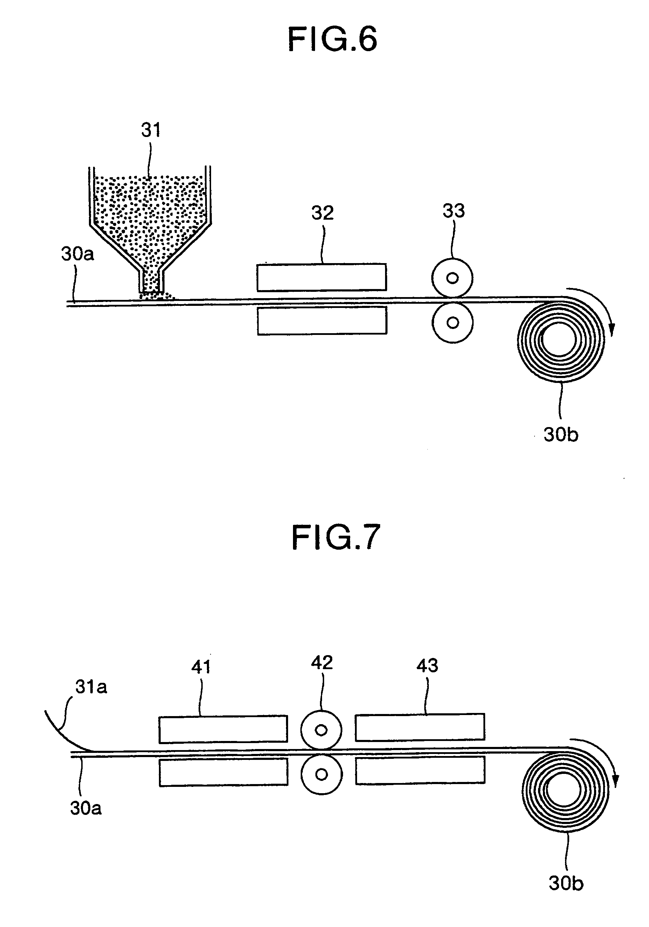

Particularly in the case where the bearing alloy consists of a copper base alloy, there is most commonly used the sintering method in which the composition of the bearing alloy, as well as the thickness of the bearing alloy layer, can be easily changed. This sintering method is schematically shown in Fig. 6, and bearing alloy powder 31 is applied to be deposited on a back metal sheet 30a supplied from a roll of steel sheet, and this is sintered by a sintering apparatus 32, and then is rolled by a rolling apparatus 33, thereby providing a laminated sheet 30b.

In the case where the bearing alloy consists of an aluminum base alloy, a bearing alloy sheet 31a is applied to be superposed on a back metal sheet 30a, supplied from a roll of steel sheet, and the thus superposed two sheets 31a and 30a are pressure-bonded together by a pressure-bonding apparatus 42, thereby providing a laminated sheet 30b.

For producing the large-size sliding bearing (i.e., the laminated sheet 30b), used for example in an internal combustion engine of a ship, by the above sintering method or the above pressure-bonding method or the above casting method, there is needed a large-size apparatus, such as a wide pressure-bonding apparatus or a wide sintering apparatus, which can deal with a large width of the sliding bearing in the axial direction. Therefore, the large-size sliding bearing, larger than the sliding bearings, which could be produced by the existing pressure-bonding apparatus and sintering apparatus, could not be produced. Even if the sintering apparatus of a large size is used, it has been technically difficult to apply the bearing alloy power uniformly over a wide area and to satisfactorily sinter it. Large-size sliding bearings have heretofore been produced by an explosion bonding method. However, with this method, the production is not easy, and besides the production cost is extremely high.

On the other hand, a sliding bearing, having a bearing alloy layer bonded to a back metal, is required to have various bearing characteristics including an excellent friction coefficient, excellent load carrying capacity, excellent wear resistance, excellent foreign matter embeddability, and excellent conformability for compensating misalignment. For example, the load carrying capacity and the wear resistance can be enhanced by making the bearing alloy layer hard, but in this case the conformability and the foreign matter embeddability become inadequate. Therefore, in accordance with the purpose of use, the bearing alloy layer, made of a material satisfying these contradictory characteristics in a balanced manner, is bonded to the back metal, thereby providing the sliding bearing.

For example, a sliding bearing is set in a housing, and a shaft is rotatably mounted on the inside of the sliding bearing. At this time, if the axis of the sliding bearing completely coincides with the axis of the shaft, and the shaft rotates about its axis, then there is no problem. However, usually, the two axes are slightly out of alignment with each other, or the shaft often rotates in an eccentric manner. Therefore, a large load acts on opposite end portions of the sliding bearing spaced from each other in the direction of the axis thereof, and only the opposite end portions are subjected to premature wear and seizure due to misalignment. In order to deal with this misalignment problem, the conventional sliding bearings use the bearing alloy layer which is excellent not only in load carrying capacity and wear resistance but also in conformability. Namely, in order to enhance the load carrying capacity and the wear resistance, a hard material is usually used as the bearing alloy layer, but in view of the balance with the misalignment, a sufficiently hard material could not be used, and the performance of the sliding bearing could not be fully improved.

Thus, although the performances, required respectively for the various portions of the inner surface of the sliding bearing arranged in the axial direction, are different, this inner surface is constituted by the common bearing alloy layer of one kind.

Further it is known to connect two annular segments of a sliding bearing for radial and axial load, such as flanged bearings or spherical bearings, see e.g. US 4 578 848 A respectively GB, 535 803 A.

### SUMMARY OF THE INVENTION

It is a first object of this invention to provide a sliding bearing which can be produced without imposing any limitation on the size of production facilities, and also to provide a method of producing this sliding bearing.

A second object of the invention is to provide a sliding bearing in which in view of the fact that the performances, required respectively for various portions of the sliding bearing arranged in the axial direction, are different, sheet pieces, respectively comprising bearing alloy layers of different bearing characteristics, are welded together in the axial direction so that the sliding bearing may be formed, thereby further enhancing the various characteristics of the sliding bearing.

The first object of the present invention has been achieved by a sliding bearing as defined in claim 1.

In the sliding bearing of the invention, preferably as defined in claim 2, an oil groove is formed along a welding portion at which the adjacent sliding bearing segments are welded together.

A method of producing the sliding bearing, achieving the first object is defined in claim 3.

In the sliding bearing-producing method of the invention, after the bimetal piece is processed into the shape of the sliding bearing in such a manner that the welding portion, at which the adjacent sheet pieces are welded together, is disposed transverse to the axis of the sliding bearing, an oil groove may, as defined in claim 4, be formed in the bearing alloy layer to extend along the bonding portion.

The second object of the invention may be achieved by a preferred embodiment of the sliding bearing defined in claim 1, wherein at least one sliding bearing segment is different in bearing characteristics from one or more of the other sliding bearing segments.

The sliding bearing achieving the second object, preferably comprises at least three sliding bearing segments, and the bearing alloy layer portions of those sliding bearing segments there in, respectively constituting opposite axial end portions of the sliding bearing, have conformability different from that of the bearing alloy layer portion(s) of the other, central sliding bearing segment(s).

In the sliding bearing achieving the first object, the plurality of sliding bearing segments, jointly constituting the sliding bearing, are welded together to be juxtaposed in the direction of the axis of the sliding bearing. With this construction, even the large-size sliding bearing can be produced by welding the small-size sliding bearing segments together, and therefore the sliding bearing can be produced at low costs. In the case where the oil groove is formed in the bearing alloy layer, and extends along the welding portion at which the adjacent sliding bearing segments are welded together, those portions of the bearing alloy layer, whose sliding characteristics are adversely affected by the welding, are removed to form the oil groove, and therefore the good sliding characteristics of the sliding bearing are maintained.

In the sliding bearing-producing method achieving the first object, the plurality of sheet pieces, serving as the sliding bearing segments each having the back metal portion and the bearing alloy layer portion bonded to the back metal portion, are welded together and processed in such a manner that the welding portion, at which the adjacent sheet pieces are welded together, is disposed transverse to the axis of the sliding bearing. Therefore, even the large-size sliding bearing can be produced by welding the small-size sliding bearing segments together, and therefore the large-size sliding bearing can be produced at low costs. By the use of production facilities originally designed to produce sliding bearings smaller in width than the sliding bearing of the invention to be produced, the desired large-size sliding bearing can be produced. In the case where the oil groove is formed along the welding portion, at which the adjacent sliding bearing segments are welded together, after the plurality of sheet pieces (serving as the sliding bearing segments) are processed into the shape of the sliding bearing, those portions of the bearing alloy layer, whose sliding characteristics are adversely affected by the welding, are removed to form the oil groove, and therefore the good sliding characteristics of the sliding bearing are maintained.

In the sliding bearing achieving the second object of the invention, the plurality of sliding bearing segments are welded together to be juxtaposed in the direction of the axis of the sliding bearing, thereby forming the sliding bearing, and at least a part of the plurality of sliding bearing segments is different in bearing characteristics from the other sliding bearing segments. Therefore, there can be obtained the sliding bearing having the required bearing characteristics in the direction of the axis of the sliding bearing, and as a result the excellent sliding bearing can be obtained. When the bearing alloy layer portions of the specified bearing alloy segments are required to have conformability different from that of the bearing alloy layer portion of the other sliding bearing segment, the bearing alloy layer portions of those sliding bearing segments (which are required to have most excellent conformability), respectively constituting the opposite axial end portions of the sliding bearing, can have the predetermined conformability, and therefore there can be obtained a sliding bearing which has excellent conformability, and also has excellent load carrying capacity and wear resistance which could not be easily made compatible with the conformability.

### BRIEF DESCRIPTION OF THE DRAWINGS

Fig. 1 is a perspective view of one preferred embodiment of a half bearing of the present invention;
Fig. 2 is a plan view showing a step of a process of producing the half bearing of Fig. 1, and showing that portion of a long laminated sheet at which a sheet piece is cut from the laminated sheet;
Fig. 3 is a plan view showing a step of the production process in which the two sheet pieces are connected together to form a bimetal piece;
Fig. 4 is a developed view showing an inner surface of the half bearing of Fig. 1;
Fig. 5 is a developed view of another embodiment of a half bearing of the invention formed by welding three sheet pieces together;
Fig. 6 is a schematic view showing a process of producing a laminated sheet by a sintering method;
Fig. 7 is a schematic view showing a process of producing a laminated sheet by a pressure-bonding method;
Fig. 8 is a perspective view of a further embodiment of a sliding bearing of the invention;
Fig. 9 is a developed view of the sliding bearing of Fig. 8, showing an inner surface thereof;
Fig. 10 is a plan view of a bimetal piece formed by connecting three sheet pieces together;
Fig. 11 is a perspective view of a further embodiment of a sliding bearing of the invention;
Fig. 12 is a developed view of the sliding bearing of Fig. 11, showing an inner surface thereof; and
Fig. 13 is a developed view of a further embodiment of a sliding bearing of the invention formed by connecting four sheet pieces together.

### DESCRIPTION OF THE PREFERRED EMBODIMENTS

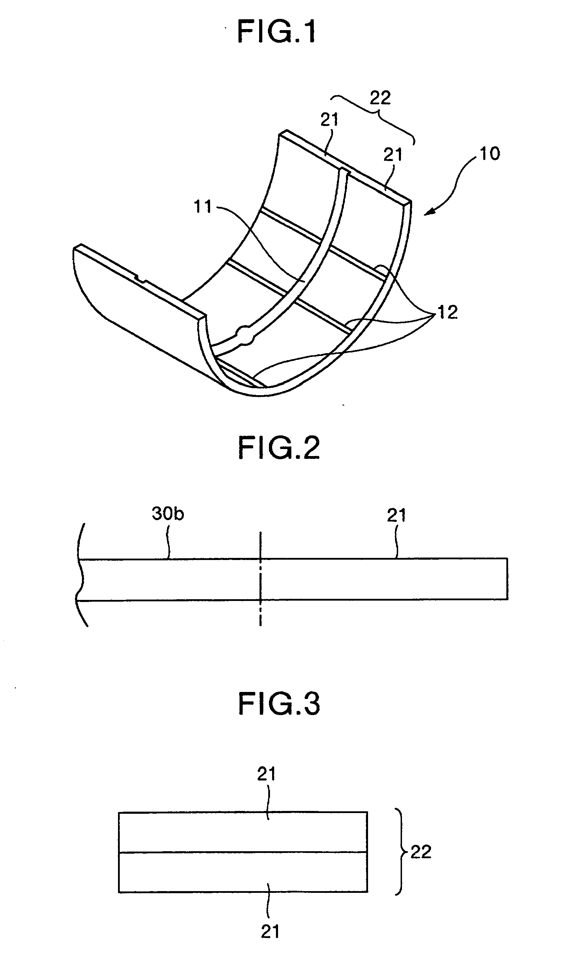

A preferred embodiment of a sliding bearing of the present invention will now be described by way of a large-size half bearing for use in an internal combustion engine of a ship. In the half bearing 10 shown in Fig. 1, a bearing alloy layer, which has a thickness of 1 mm, and comprises a copper alloy layer or an aluminum alloy layer, is bonded to a back metal having a thickness of 11 mm, and this half bearing is formed into a large-size bearing having an outer diameter of about 500 mm and a width of about 400 mm.

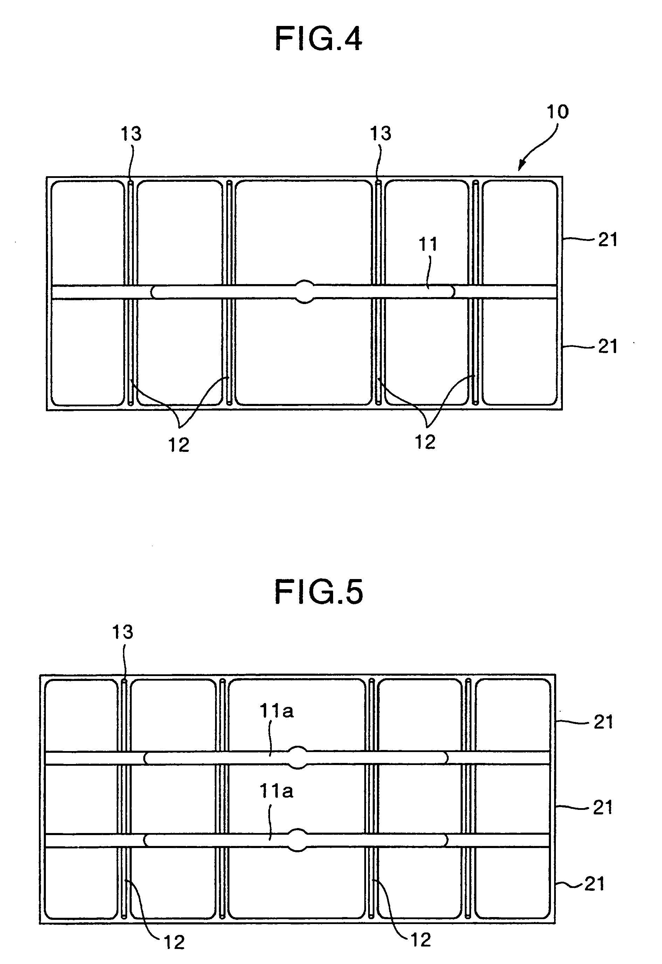

An oil groove 11 is formed in a widthwise-central portion of an inner surface (defined by the bearing alloy layer) of the half bearing 10, and extends in a circumferential direction. Four oil supply grooves 12 are formed in the inner surface, and extend in an axial direction. Oil holes 13 (see Fig. 4) are formed respectively at opposite ends of each of the oil supply grooves 12.

Steps of a process of producing the half bearing 10 of this embodiment by a sintering method (which is most suitable when the bearing alloy layer is made of a copper alloy) will be described sequentially. As shown in Fig. 6, a back metal sheet 30a (serving as a back metal), supplied from a roll of steel sheet, is treated by a pretreatment apparatus, and then powder 31 of bearing alloy (copper alloy) is applied to be deposited on the back metal sheet 30a, and this is sintered in a reducing atmosphere by a sintering apparatus 32, and then is rolled by a rolling apparatus 33, thereby producing a laminated sheet 30b having the bearing alloy layer bonded to the back metal sheet 30a.

Steps of a process of producing the half bearing 10 by a pressure-bonding method (which is most suitable when the bearing alloy layer is made of an aluminum alloy) will be described sequentially. As shown in Fig. 7, a bearing alloy sheet 31a, made of an aluminum alloy, is superposed on a back metal sheet 30a supplied from a roll of steel sheet, and then the thus superposed two sheets 31a and 30a are treated by a pretreatment apparatus 41, and then are pressed and bonded together by a press-bonding apparatus 42, and then this intermediate product is annealed by an annealing apparatus 43, thereby producing a laminated sheet 30b having the bearing alloy layer bonded to the back metal sheet 30a.

The laminated sheet 30b, thus produced by the sintering method or the pressure-bonding method, is cut into a length of the half bearing 10 in the circumferential direction, thereby providing a sheet piece 21 of a rectangular shape, as shown in Fig. 2. Then, as shown in Fig. 3, the two sheets 21 and 21 thus cut are arranged side by side, and the back metals of the two sheet pieces 21 and 21 are welded together by MIG welding. As a result, one sheet piece (i.e., bimetal piece) 22, having a width twice larger than that of the sheet piece 21, is formed.

Then, the thus formed sheet piece (bimetal piece) 22 is formed or bent into a semi-cylindrical shape by pressing, and then the dimensions of the sheet piece 22 are adjusted by cutting its inner and outer surfaces, thereby providing the half bearing 10. Further, the oil groove 11, the oil supply grooves 12 and the oil holes 13 may be formed in the inner surface.

In this embodiment of the invention, the two sheet pieces 21 and 21 are connected together to form one sheet piece (bimetal piece) 22, and therefore the wide half bearing 10, having a width about twice larger than that of the conventional half bearing, can be produced by the conventional facilities such as the sintering apparatus 33 and the pressure-bonding apparatus 42. Even if the bearing alloy layers are affected by thermal effects, such as melting, particularly since the sheet pieces are connected together by welding, these affected portions of the bearing alloy layers are removed by cutting to form the oil groove 11, and therefore the bearing characteristics will not be adversely affected even if the sheet pieces are connected together.

If three or more sheet pieces 21 are connected together, a larger bearing can be produced. Fig. 5 shows an example in which three sheet pieces 21 are connected together, and in this case two joint lines are present, and therefore two oil grooves 11a and 11a are formed in the circumferential direction.

The sheet pieces 21 can be welded together by other means than MIG welding, such as laser welding.

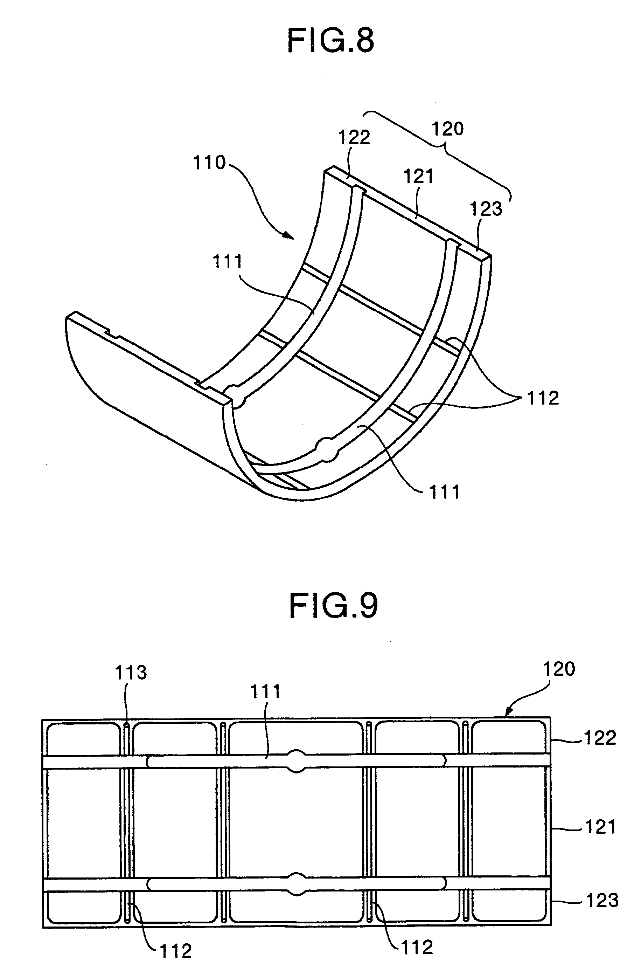

Another embodiment of a sliding bearing of the present invention, having excellent misalignment conformability, load carrying capacity and wear resistance, will now be described with reference to Figs. 8 to 10 by way of a large-size half bearing for use in an internal combustion engine of a ship.

This sliding bearing (half bearing) 110, having an outer diameter of about 500 mm and a width of about 400 mm, is formed by bending a sheet piece (bimetal piece) 120 into a semi-cylindrical shape. Two oil grooves 111 and 111 are formed in an inner surface of the half bearing, and extend in a circumferential direction. Four oil supply grooves 112 are formed in the inner surface, and extend in an axial direction, and oil holes 113 (see Fig. 9) are formed respectively at opposite ends of each of the oil supply grooves 112.

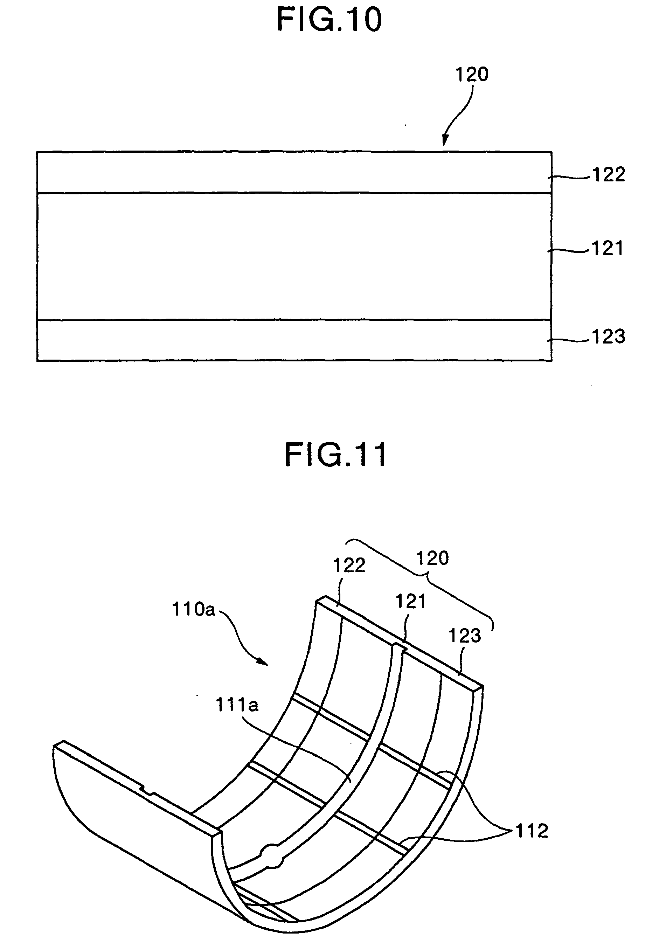

As shown in Fig. 10, a bimetal piece 120 is formed by connecting three sheet pieces (that is, a central sheet piece 121 and opposite end sheet pieces 122 and 123 arranged respectively at opposite ends of the central sheet piece 121) together by welding to provide the single bimetal piece.

The central sheet piece 121 comprises a back metal, having a thickness of 11 mm, and a bearing alloy layer bonded to the back metal, the bearing alloy layer having a thickness of 1 mm, and being composed of an aluminum alloy having excellent load carrying capacity and wear resistance.

Each of the opposite end sheet pieces 122 and 123 comprises a back metal, having the same thickness (11 mm) as that of the back metal of the central sheet piece 121, and a bearing alloy layer bonded to the back metal, the bearing alloy layer having a thickness of 1 mm, and being composed of white metal having excellent conformability.

A joint line defined between the sheet pieces (i.e., bearing segments) 121 and 122 and a joint line between the sheet pieces (i.e., bearing segments) 121 and 123 are formed respectively into the oil grooves 111 and 111 by cutting, and those portions of the bearing alloy layers of these sheet pieces, thermally affected since these sheet pieces are connected together by welding, are removed by this cutting operation.

In this embodiment of the invention, the central bearing segment 121 comprises the hard bearing alloy layer having excellent load carrying capacity and wear resistance, and conformability of this bearing alloy layer is not taken into consideration. On the other hand, each of the opposite end bearing-segments 122 and 123 comprises the bearing alloy layer having excellent conformability. Therefore, there can be provided the sliding bearing which exhibits excellent load carrying capacity and wear resistance, and also exhibits excellent conformability for misalignment.

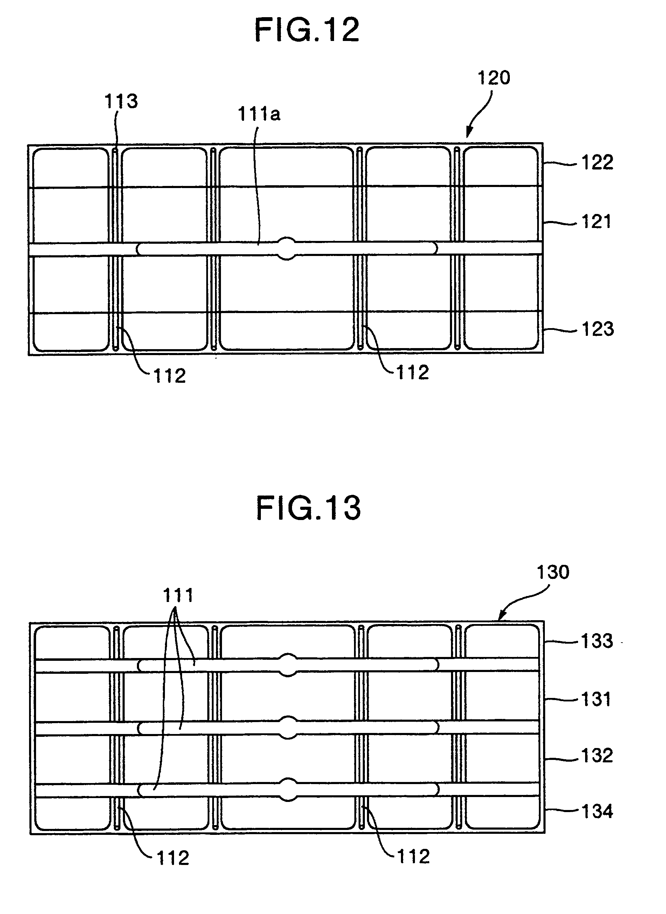

The sliding bearing 110 of the above embodiment, in which the joint lines are formed into the oil grooves 111, can be modified into a sliding bearing 110a shown in Figs. 11 and 12. In this embodiment, after a bimetal piece 120 is bent into a semi-cylindrical shape as described above for the sliding bearing 110, an oil groove 111a is formed in a widthwise-central portion of the inner surface of the sheet piece 120, and extends in a circumferential direction.

In the above two embodiments, although the three sheet pieces are connected together, four or more sheet pieces can be connected together to form one sheet piece (bimetal piece). Fig. 13 shows an example in which four sheet pieces 131, 132, 133 and 134 are connected together to form one sheet piece (bimetal piece) 130, and in this case, for example, bearing alloy layers of the two central bearing segments 131 and 132 are different in bearing characteristics from bearing alloy layers of the opposite end bearing segments 133 and 134, and thus the desired bearing alloy layer can be suitably selected for each bearing segments according to the purpose.

In the above two embodiments, although the sliding bearing has the oil grooves 111 (each formed in the joint line between the sheet pieces 131 to 134) or the oil groove 111a (formed in the inner surface thereof), the number of the oil grooves can be suitably selected in accordance with the need, and there can be provided a sliding bearing having no such oil groove.

## Claims

1. A sliding bearing (10; 120; 130) having a semi-cylindrical shape, a pair of which are combined with each other so as to form a cylindrical sleeve when using said sliding bearing, within which cylindrical sleeve a shaft is supported, wherein said sliding bearing comprises a back metal (30a) and a bearing alloy layer (31, 31a) which is bonded to said back metal and which is brought into contact with said shaft, and said semi-cylindrical sliding bearing comprises at least two sliding bearing segments (21; 121-123; 131-134) each of which has a back metal portion (30a) and a bearing alloy layer portion (31, 31a) bonded to said back metal portion, and which are arranged side by side in a direction of the axis of said sliding bearing and welded together such that a welding portion formed by said welding is directed circumferentially.

2. A sliding bearing according to claim 1, wherein portions of said bearing alloy layer extending along said welding portion are removed to form an oil groove (11; 11a; 111; 111a) extending along said welding portion.

3. A method of producing a sliding bearing (10; 120; 130), wherein said sliding bearing has a semi-cylindrical shape, a pair of which are combined with each other so as to form a cylindrical sleeve when using said sliding bearing, within which cylindrical sleeve a shaft is supported, wherein said sliding bearing comprises a back metal (30a) and a bearing alloy layer (31, 31a) which is bonded to said back metal (30a) and which is brought into contact with said shaft, and said semi-cylindrical sliding bearing comprises at least two sliding bearing segments (21; 121-123; 131-134) each of which has a back metal portion and a bearing alloy layer portion bonded to said back metal portion, and which are arranged side by side in a direction of the axis of said sliding bearing and welded together such that a welding portion formed by said welding is directed circumferentially, and wherein the method comprises the steps of:
preparing a plurality of sheet pieces (21; 121-123; 131-134) serving as said sliding bearing segments, each of said sheet pieces (21; 121-123; 131-134) being produced by bonding a bearing alloy layer (31, 31a), serving as said bearing alloy layer portion, to a metal sheet piece (30a) serving as said back metal portion;
welding said metal sheet pieces (30a) of said plurality of sheet pieces (21; 121-123; 131-134) together to form a bimetal piece (22; 120; 130) having a size corresponding to that of said sliding bearing; and
bending said bimetal piece so as to have said semi-cylindrical shape of said sliding bearing in such a manner that said welding portion is perpendicular to the axis of said sliding bearing.

4. A method according to claim 3, wherein portions of said bearing alloy layer along said welding portion or portions which are thermally affected by welding are removed to form an oil groove or grooves (11; 11a; 111; 111a) in said bearing alloy layer.

5. A sliding bearing according to claim 1, wherein at least one sliding bearing segment (122, 123; 133, 134) is different in bearing characteristics from one or more of the other sliding bearing segments (121; 131, 132).

6. A sliding bearing according to claim 5, which comprises at least three sliding bearing segments (121-123; 131-134) and in which said bearing alloy layer portions of those sliding bearing segments (122, 123; 133, 134), respectively constituting opposite axial end portions of said sliding bearing, have conformability different from that of said bearing alloy layer portion(s) of the other, central, sliding bearing segment(s) (121; 131, 132).

7. A sliding bearing according to claim 5, which comprises at least three sliding bearing segments (121-123; 131-134) and in which those sliding bearing segments (122, 123; 133, 134), respectively constituting opposite axial end portions of said sliding bearing, have excellent conformability, and the other, central, sliding bearing segment(s) (121; 131, 132) has/have excellent load carrying capacity and wear resistance.

## Patentansprüche

1. Gleitlager (10; 120; 130) mit einer halbzylindrischen Form, von denen ein Paar miteinander unter Bildung einer zylindrischen Hülse kombiniert ist, wenn das Gleitlager verwendet wird, wobei in der zylindrischen Hülse eine Welle gestützt wird, wobei das Gleitlager ein Rückseitenmetall (30a) und eine Lagerlegierungsschicht (31, 31a) umfasst, die an das Rückseitenmetall gebunden ist und die in Kontakt mit der Welle gebracht wird, und das halbzylindrische Gleitlager mindestens zwei Gleitlagersegmente (21; 121-123; 131-134) umfasst, von denen jedes einen Rückseitenmetallanteil (30a) und einen Lagerlegierungsschichtanteil (31, 31a) umfasst, der an den Rückseitenmetallanteil gebunden ist, und die nebeneinander in Richtung der Achse des Gleitlagers angeordnet sind und zusammengeschweißt sind, sodass ein durch das Schweißen gebildeter Verschweißungsanteil peripher ausgerichtet ist.

2. Gleitlager nach Anspruch 1, wobei Anteile der Lagerlegierungsschicht, die sich entlang des Verschweißungsanteils erstrecken, unter Bildung einer Ölrinne (11; 11a; 111; 111a) entfernt sind, die sich entlang des Verschweißungsanteils erstreckt.

3. Verfahren zur Herstellung eines Gleitlagers (10, 120; 130), wobei das Gleitlager eine halbzylindrische Form aufweist, von denen ein Paar miteinander unter Bildung einer zylindrischen Hülse kombiniert ist, wenn das Gleitlager verwendet wird, wobei in der zylindrischen Hülse eine Welle gestützt wird, wobei das Gleitlager ein Rückseitenmetall (30a) und eine Lagerlegierungsschicht (31, 31a) umfasst, die an das Rückseitenmetall (30a) gebunden ist und die mit der Welle in Kontakt gebracht wird, und das halbzylindrische Gleitlager mindestens zwei Gleitlagersegmente (21, 121-123; 131-134) umfasst, von denen jedes einen Rückseitenmetallanteil und einen Lagerlegierungsschichtanteil aufweist, der an den Rückseitenmetallanteil gebunden ist, und die so nebeneinander in einer Richtung der Achse des Gleitlagers angeordnet und miteinander verschweißt sind, sodass ein durch das Schweißen gebildeter Verschweißungsanteil peripher ausgerichtet ist, wobei das Verfahren die folgenden Stufen umfasst:
Herstellen einer Vielzahl von Blechstücken (21, 121-123; 131-134), die als Gleitlagersegmente dienen, wobei jedes Blechstück (21; 121-123, 131-134) durch Binden einer Lagerlegierungsschicht (31, 31a), die als Lagerlegierungsschichtanteil dient, an ein Metallblechstück (30a), das als Rückseitenmetallanteil dient, hergestellt wird;
Zusammenschweißen der Metallblechstücke (30a) der Vielzahl von Blechstücken (21; 121-123; 131-134) unter Bildung eines Bimetallstücks (22; 120; 130) mit einer Größe, die der des Gleitlagers entspricht; und
Biegen des Bimetallstücks, sodass es die halbzylindrischen Form des Gleitlagers aufweist, in einer derartigen Weise, dass der Verschweißungsanteil senkrecht zur Achse des Gleitlagers ist.

4. Verfahren nach Anspruch 3, wobei Teile der Lagerlegierungsschicht entlang des Verschweißungsanteils oder der Verschweißungsanteile, die thermisch durch das Schweißen beeinträchtigt werden, unter Bildung einer Ölrinne oder -rinnen (11; 11a; 111; 111a) in der Lagerlegierungsschicht entfernt werden.

5. Gleitlager nach Anspruch 1, wobei mindestens ein Gleitlagersegment (122, 123; 133, 134) in den Gleiteigenschaften von einem oder mehr der anderen Gleitlagersegmente (121; 131, 132) verschieden ist.

6. Gleitlager nach Anspruch 5, das mindestens drei Gleitlagersegmente (121-123; 131-134) umfasst und in dem die Lagerlegierungsschichtanteile derjenigen Gleitlagersegmente (122, 123; 133, 134), die jeweils gegenüberliegende axiale Endanteile des Gleitlagers bilden, ein Anpassungsvermögen aufweisen, das von dem des anderen Lagerlegierungsschichtanteils bzw. der anderen Lagerlegierungsschichtanteile des anderen, zentralen Gleitlagersegments bzw. der anderen zentralen Gleitlagersegmente (121; 131, 132) verschieden ist/sind.

7. Gleitlager nach Anspruch 5, das mindestens drei Gleitlagersegmente (121-123; 131-134) umfasst und in dem diejenigen Gleitlagersegmente (122, 123; 133, 134), die jeweils gegenüberliegende axiale Endanteile des Gleitlagers bilden, ein ausgezeichnetes Anpassungsvermögen aufweisen und die anderen zentralen Gleitlagersegmente bzw. das andere zentrale Gleitlagersegment (121; 131, 132) eine ausgezeichnete Belastbarkeit und eine ausgezeichnete Verschleißfestigkeit aufweisen/aufweist.

## Revendications

1. Palier lisse (10 ; 120 ; 130) présentant une forme semi-cylindrique, dont deux sont combinés l'un avec l'autre de manière à former un manchon cylindrique lorsqu'on utilise ledit palier lisse, à l'intérieur duquel manchon cylindrique un arbre est supporté, dans lequel ledit palier lisse comprend un métal de support (30a) et une couche d'alliage pour palier (31, 31a) qui est liée audit métal de support et qui est amenée en contact avec ledit arbre, et ledit palier lisse semi-cylindrique comprend au moins deux segments de palier lisse (21 ; 121-123 ; 131-134) dont chacun comporte une partie de métal de support (30a) et une partie de couche d'alliage pour palier (31, 31a) liée à ladite partie de métal de support, et qui sont agencés côte à côte dans la direction de l'axe dudit palier lisse et soudés l'un à l'autre de telle sorte qu'une partie de soudure formée par ladite soudure soit dirigée de manière circonférentielle.

2. Palier lisse selon la revendication 1, dans lequel des parties de ladite couche d'alliage pour palier s'étendant le long de ladite partie de soudure sont retirées de manière à former une rainure de graissage (11 ; 11a ; 111 ; 111a) s'étendant le long de ladite partie de soudure.

3. Procédé de fabrication d'un palier lisse (10 ; 120 ; 130), dans lequel ledit palier lisse présente une forme semi-cylindrique, dont deux sont combinés l'un avec l'autre de manière à former un manchon cylindrique lorsqu'on utilise ledit palier lisse, à l'intérieur duquel manchon cylindrique un arbre est supporté, dans lequel ledit palier lisse comprend un métal de support (30a) et une couche d'alliage pour palier (31, 31a) qui est liée audit métal de support (30a) et qui est amenée en contact avec ledit arbre, et ledit palier lisse semi-cylindrique comprend au moins deux segments de palier lisse (21 ; 121-123 ; 131-134) dont chacun comporte une partie de métal de support et une partie de couche d'alliage pour palier liée à ladite partie de métal de support, et qui sont agencés côte à côte dans la direction de l'axe dudit palier lisse et soudés l'un à l'autre de telle sorte qu'une partie de soudure formée par ladite soudure soit dirigée de manière circonférentielle, et dans lequel la méthode comprend les étapes consistant à :
préparer une pluralité de pièces formant feuilles (21 ; 121-123 ; 131-134) jouant le rôle desdits segments de palier lisse, chacune desdites pièces formant feuilles (21 ; 121-123 ; 131-134) étant produite en liant une couche d'alliage pour palier (31, 31a), jouant le rôle de ladite partie de couche d'alliage pour palier, sur une pièce formant feuille métallique (30a) jouant le rôle de ladite partie de métal de support ;
souder lesdites pièces formant feuilles métalliques (30a) de ladite pluralité de pièces formant feuilles (21 ; 121-123 ; 131-134) les unes aux autres de manière à former une pièce bimétallique (22 ; 120 ; 130) ayant une taille qui correspond à celle dudit palier lisse ; et
courber ladite pièce bimétallique de manière à ce que, grâce à ladite forme semi-cylindrique dudit palier lisse, ladite partie de soudure soit perpendiculaire à l'axe dudit palier lisse.

4. Procédé selon la revendication 3, dans lequel des parties de ladite couche d'alliage pour palier le long de la ou desdites parties de soudure qui sont objet d'une atteinte thermique à cause de la soudure sont extraites de manière à former une ou des rainures de graissage (11 ; 11a ; 111 ; 111a) dans ladite couche d'alliage pour palier.

5. Palier lisse selon la revendication 1, dans lequel au moins un segment de palier lisse (122 ; 123 ; 133, 134) est différent du point de vue des caractéristiques de palier d'un ou de plusieurs autres segments de palier lisse (121 ; 131, 132).

6. Palier lisse selon la revendication 5, qui comprend au moins trois segments de palier lisse (121-123 ; 131-134) et dans lequel lesdites parties de couche d'alliage pour palier de ces segments de palier lisse (122, 123 ; 133, 134), constituant respectivement des parties d'extrémité axiales opposées dudit palier lisse, présentent une conformabilité différente de celle de ladite partie de couche d'alliage pour palier (5) de l'autre ou des autres segment(s) central/ux de palier lisse (121 ; 131, 132).

7. Palier lisse selon la revendication 5, qui comprend au moins trois segments de palier lisse (121-123 ; 131-134) et dans lequel ces segments de palier lisse (122, 123 ; 133, 134), constituant respectivement des parties d'extrémité axiales opposées dudit palier lisse, présentent une conformabilité excellente, et l'autre ou les autres segment(s) central/ux de palier lisse (121 ; 131, 132) présente(nt) une excellente capacité portante et une excellente résistance à l'usure.
